# EUROPEAN PATENT APPLICATION

(11) **EP 1 889 810 A1**
(43) Date of publication of application: **20.02.2008**
(21) Application number: 06405339.0
(22) Date of filing: 10.08.2006
(51) Int. Cl.: C01B 33/18, A01N 59/00

(54) **Method for producing nanoparticle loaded powders using flame spray pyrolysis and applications thereof**

(71) Applicant: HeiQ Materials AG, 8005 Zürich (CH)
(72) Inventor: Height, Murray, J., 8057 Zürich (CH)
(74) Representative: Bremi, Tobias Hans

(57) **Abstract**

Various improved flame spray pyrolysis methods for producing a flame-made doped silica (SiO₂) in the form of particles in particular preferably having antimicrobial and/or antibacterial and/or antifungal effect are described as well as corresponding powders and uses thereof.

## Description

### TECHNICAL FIELD

The invention relates to improved methods for producing nanoparticle loaded powders using flame spray pyrolysis and to applications thereof.

### BACKGROUND OF THE INVENTION

From PCT/CH 2006/000084 [1] it is known to produce materials with antimicrobial and antifungal properties. These materials are based on an amorphous silicon dioxide aggregate structure that may variously contain discrete nanoparticles of silver/silver oxide (antibacterial functionality), copper/copper oxide (antifungal functionality). Similarly other nanoparticles of various compositions (and associated functionalities) may be included in the silicon dioxide matrix. These materials are produced using the flame spray pyrolysis (FSP) process. The patent application [1] applies to silicon dioxide particles containing nanoparticles of silver and/or copper and/or their oxides. Zinc oxide, titanium dioxide, and/or aluminium oxide are disclosed to be added as further dopants in order to change morphological properties of the particles. The document describes various methods to improve the properties of doped silicon dioxide materials and in particular the properties of antimicrobial and antifungal materials.
The present application relates to further improvements to this technology.

### SUMMARY OF THE INVENTION

The objective problem underlying the present invention is therefore to provide various improvements to the process as disclosed in [1] as well as to the applications and particles described therein.
Since the present application is an improvement of the disclosure of [1], the disclosure of [1] is explicitly fully included in the present application, in order to avoid duplication. In particular in terms of the specifics of the flame spray pyrolysis method, the individual chemicals to be used in this method, and the apparatus used for carrying out the flame spray pyrolysis method, the disclosure of [1] is explicitly included herein.
Improvements in terms of the flame spray pyrolysis synthesis are given in the corresponding independent claims. In addition to that, new and unexpectedly interesting uses and particles are disclosed as compared with the disclosure of [1].
Further embodiments of the present invention are outlined in the dependent claims.

### SHORT DESCRIPTION OF THE FIGURES

In the accompanying drawings preferred embodiments and illustrations of the invention are shown in which:
- Figure 1: is a simplified diagram showing key steps in FSP materials synthesis; and
- Figure 2: a) is a schematic representation of a silver-silica nanocomposite particle, wherein silver ions are released on contact with moisture, and b) is a TEM micrograph of a typical silver-silica nanocomposite particle.

### DETAILED DESCRIPTION OF THE PREFERRED EMBODIMENTS

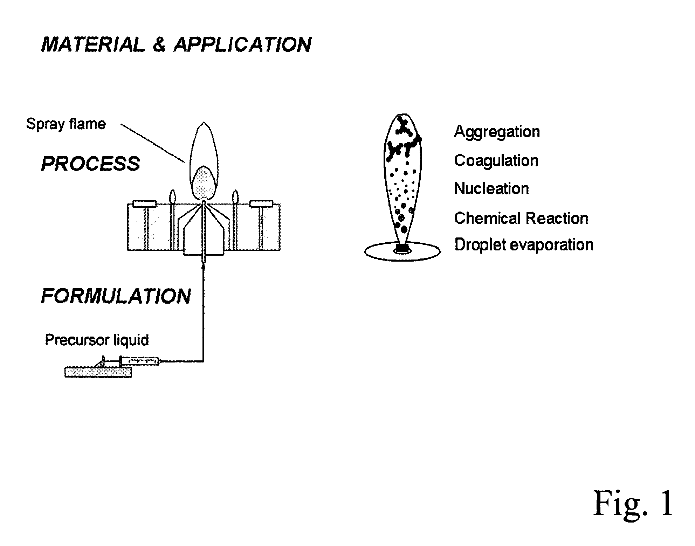

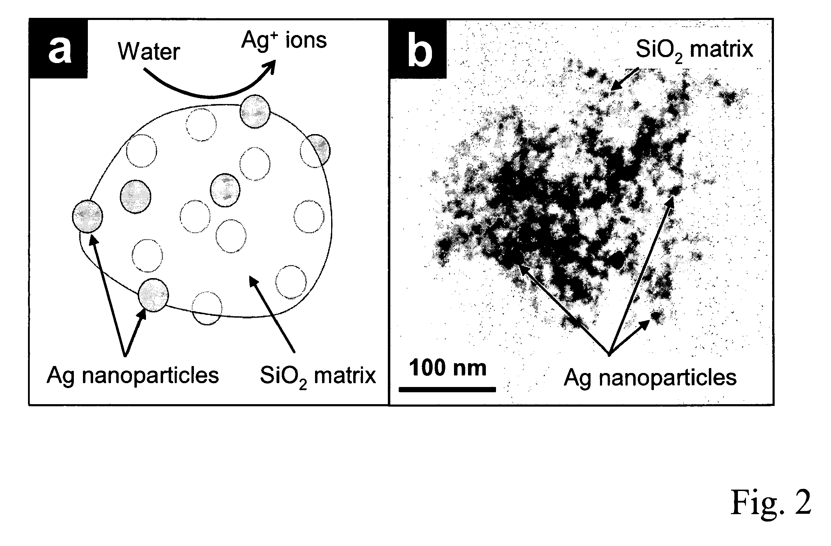

A range of unique powder materials can be produced using a combustion synthesis process known as flame spray pyrolysis (FSP) [2]. FSP involves the combustion of a liquid spray to generate a high temperature flame, ideal for material synthesis (Figure 1). The main component of the liquid solution is a flammable organic solvent that serves two purposes, namely supplying combustion energy to the system and as a solvent medium for delivering metal-organic precursor compounds to the flame system. As used in this context, the expression "solvent" includes a single solvent as well as mixtures of solvents. Without wanting to be bound by any theory, it may be assumed, that upon entering the high temperature flame, the solvent droplets rapidly evaporate and combust while the precursor compounds are dispersed into the gaseous environment where they decompose and oxidize to form discrete metal-oxide monomers. Nanoparticle growth proceeds from this monomer nucleation step via a coagulation growth mechanism followed by sintering and aggregation as the flame cools [3, 4]. Silver metal is well known to exhibit antibacterial activity [5]. The antibacterial activity of silver derives from the release of Ag⁺ cations which, upon contact with the bacteria cells, bind strongly to electron donor groups on constituent bacterial molecules containing sulphur, oxygen, or nitrogen [6]. The Ag⁺ cation also displaces essential metal ions such as Ca²⁺ and Zn²⁺ and damages the bacterial cell membrane [7]. The required concentration for antimicrobial activity can be very low, with levels of 5 to 10 ppb in water capable of biocidal activity [8].
The FSP derived silver-silica antibacterial material (Figure 2a) is composed of an amorphous silica (SiO₂ agglomerated matrix forming a particle with a typical size of 100 nm to 1 µm (Figure 2b). The fine size of the silica particles allows them to be readily mixed into synthetic fibres and plastics. Each silica particle contains many smaller silver metal particles each with a size between 5 and 20 nanometers (Figure 2b).
These silver particles are found on the surface of the silica structure and also embedded throughout the silica particle. The silver nanoparticles act as a reservoir for the release of silver ions that ultimately act against the bacteria. The presence of both surface and embedded silver particles gives the material a combination of immediate antibacterial activity combined with long-term durability. Similarly the inclusion of copper containing nanoparticles and the release of copper ions can provide effectiveness against fungi.
The properties of the material that may give improved application performance include:
• Control of dosage (material composition range)
• Material colour
• Control of metal ion release rate
**·** Generalized dispersion of embedded nanoparticles in plastics and liquids avoiding agglomeration of nanoparticles in these substrates.

### Improvement in terms of compositions:

The strength and duration of antibacterial and/or antifungal effect is dependent on the loading of the active component(s) (silver and/or copper) within the application. For the silver and/or copper containing silicas described in [1], only contents of these metals of up to 5 at% relative to silicon are described. It is hypothetically indicated in this document that it might be beneficial to have higher concentrations if the time of protection shall be extended without however giving specific examples thereof.
Surprisingly it was now found that going to higher concentrations can have a number of unexpected advantages. As a matter of fact, this allows to achieve stronger efficacy and not only of lifetime of effect for certain demanding applications. The higher concentration of active component per mass of additive powder would enable access to an unexpectedly wider range of applications.
Silica based powders containing nanoparticles of silver and/or copper and/or their oxides with component loadings of greater than 5 at% (based on silicon) bring enhanced antibacterial and/or antifungal strength and durability of effect. Furthermore due to the resulting different sizes of the silver and/or copper containing nanoparticles a different time release behaviour is possible as well as different sizes of these particles can be obtained leading to a unexpectedly and substantially different colour appearance. Higher loadings may be achieved by introducing a higher concentration of metal-containing compound within the precursor liquid.
Specific properties of such higher ranges are given in table 1 below:

**Table 1: Summary of composition and resulting effects as could be shown by Agar Plate tests and optical inspection.**

| Ag loading (at%; relative to silicon) | Comment |
|---|---|
| 0 to 5 | As in [1] |
| 5 to 15 | Improved strength and duration of effect, colour changed |
| 15 to 36 | Heavy dosing for severe applications, further improved strength and duration of effect, colour changed |
| >36 | Useful for other applications (eg. Mechanical and / or Electronic applications). |

### Improvement in terms of colour:

The previous patent application [1] describes silica based powders doped with silver and/or copper and/or their oxides that possess antibacterial and/or antifungal activity. These materials exhibit various shades of non-white colour. Silver-doped silicas typically are brown with the intensity of colour shade increasing with increasing silver content. Copper-doped silicas are typically blue/green with colour intensity also increasing with doping content.
From a commercial perspective powders that are white, or with minimal colour shade, would have wider market appeal. With this in mind, control of the powder colour, while maintaining the primary anti-bacterial/anti-fungal activity is an important objective.
Technical background: Silver- and/or copper-doped silica derived from flame spray pyrolysis are in principle non-white powders. For silver-doped silica in particular the shade of colour can range from light to intense brown with increasing silver content. On first consideration this colour effect is surprising as the silver particles are typically 5 to 50 nm in diameter - significantly smaller than the wavelength of light and would be expected to have limited scattering interaction with electromagnetic irradiation. The origin of the colour, as already discussed in the initial patent application [1] derives from enhanced light scattering resulting from an effect known as localized surface plasmon resonance [9]. This effect involves the collective excitation of conduction level electrons in separate nanoparticles [10], a phenomena most commonly associated with silver and gold nanoparticles. The associated colour is dependent on a number of factors, including the material, size distribution and shape of the nanoparticles together with the surrounding environment [9].
Controlling colour: There are two main strategies that can, in a further improvement, be employed to control the colour of the silver-silica nanocomposite particles:
- Influencing the size and size distribution of the embedded nanoparticles.
- Influencing the silica matrix surrounding the nanoparticles.

### Size and size distribution:

The silver-silica nanocomposite particles produced using FSP feature silver metal nanoparticles with a representative size range between 5 and 20 nm as observed with TEM, however, smaller and larger particles are also commonly observed within the composite structure. The average silver particle size as estimated from XRD patterns is typically 20 to 30 nm. This distribution of sizes for the embedded silver nanoparticles gives a combined influence on the overall colour, however, the plasmon resonance effect is most pronounced for the smallest particles (ca. <30 nm). Silver nanoparticles around 10 nm in diameter typically exhibit a yellow colour while those between 20 and 30 nm have a red colour, while larger nanoparticles of silver (typically 50 nm and larger) are near white colour [10]. Shifting the size distribution of the embedded silver nanoparticles so as to minimize the proportion of sub-30 nm particles therefore results in less colour and therefore to a whiter appearance of the particles.

The distance between the nanoparticles also has an important influence on the intensity of the colour. Interparticle distances greater than 5 to 10 particle diameters show diminished electromagnetic interaction and associated surface plasmon resonance [10]. Providing more space between the embedded silver nanoparticles within the silica matrix can therefore lower the colour intensity. Increasing the distance between the nanoparticles can be achieved by correspondingly adjusting the process parameters (injection speed, temperature, temperature gradient, cooling rates etc) and the concentrations in the precursor solution.

### Silica matrix:

The colour intensity of the localized surface plasmon resonance is also influenced by the surrounding medium [9]. The colour of the silver-silica nanocomposite can therefore be influenced by changing the structure and/or composition of the silica matrix. Possible avenues for achieving this include controlling the proportion of exposure/embedding of the silver nanoparticles or introducing other nanoparticles (e.g. Zinc oxide or titanium dioxide or aluminium oxide) that interfere with the electromagnetic interaction between the silver nanoparticles and/or change the refractive index of the silica matrix. The introduction of other nanoparticles such as zinc or titanium oxides also provides an opacifying effect, lowering the intensity of the colour.

The nature of this improvement thus relates to execution of the FSP synthesis process so as to control material structure and composition in such a manner as to achieve materials exhibiting a controlled colour. Specifically these adaptations of the process or are summarised in table 2:

**Table 2: Specific modifications of the process for achieving colour alterations, in particular for brightening the final particles.**

| Material property | Methodology |
|---|---|
| Shifting size distribution to minimize number of sub-30nm silver nanoparticles 30nm silver nanoparticles | **•** Prolonged exposure to high flame temperatures leads to growth of larger silver particles. This can be achieved by a high precursor liquid feed-rate giving increased flame height and/or higher precursor concentration and/or retaining heat within the flame gases by use of a ceramic tile (or other insulating material) surrounding the spray flame for the height of the flame. |
| | **•**A shift to larger silver particle sizes can also be achieved through a post-synthesis heat treatment (annealing) step at temperatures above 400 °C. |
| Increase average distance between embedded silver nanoparticles (eg. >5 silver particle diameters) silver particle diameters) | • A lower concentration of silver nanoparticles in the silica matrix gives increased average separation distance and lower colour. This can be achieved by introducing a lower concentration of silver compound in the precursor liquid. eg. 3at% Ag/SiO₂ has less colour than 5at% Ag/SiO₂. |
| Introducing other nanoparticles within the silica matrix within the silica | **•** Other nanoparticles such as zinc oxide and/or titanium dioxide and/or aluminium oxide may be introduced into the silica matrix by inclusion of suitable metal containing compounds in the liquid precursor formulation. |

Additional remarks: It is also possible to simultaneously synthesize and embed pigment nanoparticles within the powder during the flame-spray pyrolysis synthesis step to achieve white or specifically coloured powders with antibacterial and/or antifungal functionality. A specific extension of this is to embed pigment nanoparticles of a specific colour selected so as to cancel the base colour of the silver/silica powder.

### Improvements in terms of ion release rate

The activity of antibacterial and antifungal powders derives from the release of silver (Ag⁺) and copper (Cu²⁺) ions upon contact with moisture and transport of these ions to the target organism(s). The nanoparticles of silver and/or copper and/or their oxides are therefore sources of the ions that are released from these reservoirs through a dissolution mechanism. The effectiveness of antibacterial and antifungal additives is a function of the concentration of ions that can be delivered to the environment surrounding the particles. For example, in certain applications a rapid release of ions is required to achieve a strong dosage with immediate activity whereas other applications may require a slower release over a prolonged time period. Controlling the rate of release of the ions is therefore a key consideration in tuning the effectiveness of the powders to best suit particular application demands.
Controlling release rate: Two methods for controlling the release rate of silver ions are described here:
**•** Enhanced release rate via galvanic interaction
**•** Release rate control through control of moisture transport.

### Galvanic interaction:

The inclusion of platinum metal in silver metal films has been shown to give enhanced release of silver ions and to improve the antibacterial effectiveness compared to pure silver [11, 12]. The origin of this effect is the higher galvanic activity of silver metal compared to platinum metal [12]. Direct electrical contact between silver and platinum metals immersed in an electrolyte leads to galvanic corrosion of the silver, thereby giving an increased silver ion release rate compared to pure silver.
Antibacterial silver-silica powders produced using FSP can offer increased ion release rates when doped with small quantities of platinum metal. Such powders can be realised through the addition of soluble platinum precursor compounds into the liquid precursor used in the flame synthesis of the silver-silica powders described in [1]. Suitable doping concentrations lie between 0 and 5 at% (relative to silicon). Furthermore it is possible to achieve this enhanced activity through the addition of other metals that have lower galvanic activity than silver e.g. gold and palladium.

Prior art in this respect: There are two documents describing the enhanced role of platinum in contact with silver metal, however, these relate specifically to medical components and macroscale metal features [13, 14]. There are literature papers reporting the catalytic activity of silicas doped with silver-platinum [15] and silver-palladium [16] however these materials are synthesized using wet-phase (impregnation) methods. The flame synthesis of platinum-doped silver-silica powders exhibiting enhanced antibacterial activity does not appear in the prior art.

### Moisture transport:

Antibacterial and antifungal powders rely on the release and transport of metal ions that ultimately act against the bacteria or fungi. The silver ion release mechanism is dependent on contact with moisture and the dissolution of the silver metal. Enhancing the contact between moisture and nanoparticles of silver and/or copper and/or their oxides that are supported within the silica matrix thereby leads to enhanced release of the metal ions.

Improved transport of moisture to the supported nanoparticles can be achieved through tailoring the structure of the silica matrix. Methods to achieve this may include: A smaller silica aggregate structure can be achieved by lowering the concentration of silica precursor compound within the FSP feed liquid. A high cooling rate of the flame gases can also lead to a higher proportion of silver nanoparticles supported on the surface of the silica structure (and thereby more fully exposed to contact with moisture) rather than buried within the silica.

### Improvements in terms of silica as a generic scaffold for nanoparticles:

The FSP-made silica materials featuring embedded nanoparticles of silver and/or copper and/or their oxides as described in [1] exhibit surprisingly excellent dispersion performance in many polymers and liquids. Amorphous silica is commonly employed as a filler material in a range of plastic materials [17]. The effective dispersion of nanoparticles within polymer substrates can often be difficult due to the formation of agglomerates [18]. The flame-synthesis of silica featuring embedded nanoparticles typically show the nanoparticles as distributed uniformly throughout the silica aggregate structure [1]. The nanoparticles supported throughout the silica structure may therefore be considered as being in a pre-dispersed state and so dispersing the larger silica structure within polymers or liquids maintains the nanoparticles in a dispersed state, thus avoiding agglomeration of the nanoparticles. The silica is therefore a convenient scaffold for enabling effective dispersion of embedded nanoparticles within a variety of substrates. Furthermore the silica structure may be chemically modified to provide functional groups that may enhance dispersion in selected polymer or liquid substrates.

### Generic scaffold for pre-dispersion of nanoparticles:

Flame synthesis of silica featuring embedded nanoparticles is an effective strategy for producing a material that may be readily dispersed within polymers and liquids. This has been demonstrated for the antibacterial and antifungal powders described in [1]. There may be opportunity to extend this principle to flame-made silica materials containing various metal and/or metal oxide nanoparticles for a range of other applications so in applications except antimicrobial and/or antibacterial and/or antifungal applications.

### Prior art analysis:

Flame-made silica materials featuring dopant nanoparticles are listed in the following table 3:

**Table 3: FSP-made silica materials featuring dopant nanoparticles**

| **Ref** | **Description** | **Comments** |
|---|---|---|
| 19 | "Flame Spray Pyrolysis of precursors as a route to nano-mullite powder: powder characterization and sintering behaviour". FSP synthesis of 3Al₂O₃.2SiO₂ powder. | Al₂O₃ and SiO₂ powder only. 60-100nm size. |
| 20 | "Controlled synthesis of nanostructured particles by flame spray pyrolysis". Silica from FSP. Effect of operating parameters on silica morphology. | SiO₂ only. No dopants. |
| 21 | "Synthesis of zinc oxide/silica composite nanoparticles by flame spray pyrolysis". FSP synthesis of silica particles with ZnO particles embedded in the silica matrix. | SiO₂ doped with ZnO. Focus applications catalysts & optical materials |
| 22 | "Rapid synthesis of stable ZnO quantum dots". ZnO particles of uniform size embedded in an amorphous silica matrix. ZnO exhibits 'blueshift' due to quantum confinement. | SiO₂ doped with ZnO. Focus optical materials application. |
| 23 | "Simultaneous deposition of Au nanoparticles during flame synthesis of TiO₂ and SiO₂". FSP synthesis of titania and silica with gold particles deposited on their surface. | TiO₂ and SiO₂. With gold (Au) only. Target applications: optics, catalysis, electronics. |
| 24 | "Nanoparticle synthesis at high production rates by flame spray pyrolysis". FSP synthesis of silica at production rates up to 1.1 kg/h. | SiO₂ only. No dopants. |
| 25 | "Evolution of the morphology of zinc oxide/silica particles made by spray combustion". Emulsion FSP synthesis of ZnO/SiO₂ particles. | SiO₂ doped with ZnO. Focus applications catalysts & optical materials |
| 26 | "Transparent nanocomposites of radiopaque, flame-made Ta₂O₅/SiO₂ particles in an acrylic matrix" | SiO₂ doped with Ta₂O₅ for radio-opaque acrylic dental fillings. |
| 27 | "Dental composites based on radio-opaque spray flame synthesis mixed oxides" | SiO₂ doped with oxides of high atomic weight metals for radio-opaque dental fillings. |
| 28 | "Dental composite used as direct filling material for cavities, as fixing cement, or as material for inlays or facing materials, comprises nanoparticulate mixed oxide" | SiO₂ doped with oxides of high atomic weight metals for radio-opaque dental fillings. |

The prior art for the flame-made doped silicas relates heavily to radio-opaque dental applications [26, 27, 28] which allow for multiple metal-oxide nanoparticles embedded within the silica and relates to dispersing the particles within polymers. Other prior art relates to zinc oxide embedded in silica for optical applications [22, 25].
There appears to be no disclosure for coverage related to the flame synthesis of silicas doped with metal and/or metal-oxide nanoparticles specifically to enable the straightforward dispersion of the silica particles within polymer and liquid substrates and thereby giving effective dispersion of the contained nanoparticles for fields of application except those disclosed in [1]. So e.g. applications involving electrical properties (e.g. conducting plastics) and mechanical applications (e.g. reinforced materials) can benefit from such an approach. Silicas including zinc oxide plus at least one other nanoparticle component (e.g. titanium dioxide) may also be beneficial for optical applications (e.g. UV protection).

### REFERENCES

1. ETH Zurich, Antimicrobial and antifungal powders made by flame spray pyrolysis, 2005, PCT/CH2005/000077, (patent pending).
2. Mädler L, Kammler HK, Mueller R, Pratsinis SE. Controlled synthesis of nanostructured particles by flame spray pyrolysis, Journal of Aerosol Science 2002; 33:369-389.
3. Pratsinis SE. Flame aerosol synthesis of ceramic powders, Progress in Energy and Combustion Science 1998; 24: 197-219.
4. Mädler L. Liquid-fed aerosol reactors for one-step synthesis of nano-structured particles, KONA Powder Science and Technology in Japan 2004; 22: 107-120.
5. Yeo SY, Lee HJ, Jeong SH. Preparation of nanocomposite fibers for permanent antibacterial effect, Journal of Materials Science 2003; 38: 2143-2147.
6. Dowling DP, Donnelly K, McConnell ML, Eloy R, Arnaud MN. Deposition of anti-bacterial silver coatings on polymeric substrates, Thin Solid Films 2001; 398-399: 602-606.
7. Sondi I, Salopek-Sondi B. Silver nanoparticles as antimicrobial agent: a case study on E- coli as a model for Gram-negative bacteria, Journal of Colloid and Interface Science 2004; 275(1): 177-182.
8. Gilchrist T, Healy DM, Drake C. Controlled silver-releasing polymers and their potential for urinary tract infection control, Biomaterials 1991; 12: 76-78.
9. Hutter E, Fendler JH. Exploitation of localized surface plasmon resonance, Advanced Materials 2004, 16(19): 1685-1706.
10. Quinten M. The color of finely dispersed nanoparticles, Applied Physics B 2001, 73 (4): 317-326.
11. Betts AJ, Dowling DP, McConnell ML, Pope C. The influence of platinum on the performance of silver-platinum anti-bacterial coatings, Materials & Design 2005, 26(3): 217-222.
12. Dowling DP, Betts AJ, Pope C, McConnell ML, Eloy R, Arnaud MN. Anti-bacterial silver coatings exhibiting enhanced activity through the addition of platinum, Surface & Coatings Technology 2003, 163: 637-640.
13. Implemed, Iontophoretic structure for medical devices 1994, US5322520.
14. Becton Dickenson, Antimicrobial surfaces and inhibition of microorganism growth thereby 1989, US4886505.
15. DeJong KP, Bongenaar-Schlenter BE, Meima GR, Verkerk RC, Lammers MJJ, Geus JW. Investigations on silica-supported platinum silver alloy particles by infrared-spectra of adsorbed CO and N2, Journal of Catalysis 1983, 81 (1): 67-76.
16. Karski S, Witonska I, Rogowski J, Goluchowska J. Interaction between Pd and Ag on the surface of silica, Journal of Molecular Catalysis A 2005, 240(1-2): 155-163.
17. Ettlinger M, in Ullmann's Encyclopedia of Industrial Chemistry, 6th ed. (Ed.: M. Bohnet), Wiley-VCH Verlag GmbH & Co. KGaA, 2003.
18. Corbierre MK, Cameron NS, Sutton M, Laaziri K, Lennox RB, Gold nanoparticle/polymer nanocomposites: Dispersion of nanoparticles as a function of capping agent molecular weight and grafting density, Langmuir 2005, 21: 6063.
19. Baranwal R, Villar MP, Garcia R Laine RM. Flame spray pyrolysis of precursors as a route to nano-mullite powder: Powder characterization and sintering behavior, Journal of the American Ceramic Society 2001, 84: 951-961.
20. Mädler L, Kammler HK, Mueller R, Pratsinis SE. Controlled synthesis of nanostructured particles by flame spray pyrolysis, Journal of Aerosol Science 2002, 33: 369-389.
21. Tani T, Mädler L, Pratsinis SE. Synthesis of zinc oxide/silica composite nanoparticles by flame spray pyrolysis, Journal of Materials Science 2002, 37: 4627-4632.
22. Mädler L, Stark WJ, Pratsinis SE. Rapid synthesis of stable ZnO quantum dots, Journal of Applied Physics 2002, 92: 6537-6540.
23. Mädler L, Stark WJ, Pratsinis SE. Simultaneous deposition of Au nanoparticles during flame synthesis of TiO2 and SiO2 Journal of Materials Research 2003, 18: 115-120.
24. Mueller R, Madler L, Pratsinis SE. Nanoparticle synthesis at high production rates by flame spray pyrolysis, Chemical Engineering Science 2003, 58: 1969-1976.
25. Tani T, Takatori K, Pratsinis SE. Evolution of the morphology of zinc oxide/silica particles made by spray combustion, Journal of the American Ceramic Society 2004, 87: 365-370.
26. Schulz H, Mädler L, Pratsinis SE, Burtscher P, Moszner N. Transparent nanocomposites of radiopaque, flame-made Ta2O5/SiO2 particles in an acrylic matrix, Advanced Functional Materials 2005, 15(5): 830-837.
27. Ivoclar Vivadent, Dental composites based on radio-opaque spray flame synthesis mixed oxides 2005, WO2005075348.
28. Ivoclar Vivadent, Dental composite used as direct filling material for cavities, as fixing cement, or as material for inlays or facing materials, comprises nanoparticulate mixed oxide 2005, DE102004017125.

## Claims

1. A flame spray pyrolysis method for producing a flame-made doped silica (SiO₂) in the form of particles having antimicrobial and/or antibacterial and/or antifungal effect, wherein said flame-made doped silica comprises at least one functional dopant, said functional dopant consisting of at least one antimicrobial and/or antibacterial and/or antifungal acting metal and/or metal comprising compound, said method comprising
(i) preparing a precursor solution comprising at least one functional dopant precursor and at least one silica precursor in an organic solvent,
(ii) spraying said precursor solution into a flame fuelled by combustion of said precursor solution itself,
(iii) collecting the particulate doped silica,
wherein the precursor solution comprises a silver and/or copper precursor compounds as functional dopant precursor in molar ratios above 5 at% relative to silicon.

2. A method according to claim 1, wherein the functional dopant precursor is present in the precursor solution in molar ratios in a range of above 5 to 15 at%, or in a range of 15 - 36 at%, or above 36 at% relative to silicon.

3. A flame spray pyrolysis method for producing a flame-made doped silica (SiO₂) in the form of particles having antimicrobial and/or antibacterial and/or antifungal effect, wherein said flame-made doped silica comprises at least one functional dopant, said functional dopant consisting of at least one antimicrobial and/or antibacterial and/or antifungal acting metal and/or metal comprising compound, said method comprising
(i) preparing a precursor solution comprising at least one functional dopant precursor and at least one silica precursor in an organic solvent,
(ii) spraying said precursor solution into a flame fuelled by combustion of said precursor solution itself,
(iii) collecting the particulate doped silica,
wherein the temperature history of the particles within the flame and/or post-flame environment is controlled for colour control of the final particles, such as by a high or low precursor liquid feed rate, and/or by a higher or lower precursor concentration and/or by retaining heat within the flame gases and/or by a post synthesis heat treatment.

4. A method according to claim 3, wherein a temperature control device is used in the form of an insulating ceramic tube or such other suitable material for retaining heat within the flame.

5. A method according to any of claims 3 or 4, wherein a temperature control device is used in the form of a secondary flame positioned to introduce additional heat to the spray flame exhaust gases.

6. A method according to any of claims 3-4, wherein a post-flame treatment step is applied whereby the materials as synthesized by the above processes are maintained at a temperature in excess of 400 °C for sufficient time to modify the colour of the material.

7. A method according to claim 6, wherein the materials are treated for sufficient time to allow the nanoparticles embedded in the silica to exhibit a characteristic size range between 30 and 100 nm.

8. A flame spray pyrolysis method for producing a flame-made doped silica (SiO₂) in the form of particles having antimicrobial and/or antibacterial and/or antifungal effect, wherein said flame-made doped silica comprises at least one functional dopant, said functional dopant consisting of at least one antimicrobial and/or antibacterial and/or antifungal acting metal and/or metal comprising compound, said method comprising
(i) preparing a precursor solution comprising at least one functional dopant precursor and at least one silica precursor in an organic solvent,
(ii) spraying said precursor solution into a flame fuelled by combustion of said precursor solution itself,
(iii) collecting the particulate doped silica,
wherein the precursor solution comprises a silver and/or copper precursor compound as functional dopant precursor and wherein the precursor solution additionally comprises dopant metals possessing a lower galvanic activity than silver and/or copper, preferably in the form of discrete nanoparticles, and/or alloyed with a nanoparticles of silver and/or copper and/or oxides of silver and/or oxides of copper, and wherein even more preferably the additional dopant metal is platinum and/or palladium and/or gold.

9. Use of additional metal and/or metal-oxide nanoparticles and/or pigments, preferably in a method according to any of the preceding claims, specifically to influence the overall colour of the material.

10. Use according to claim 9, wherein said metal-oxide nanoparticles are selected from zinc oxide or titanium dioxide or aluminium oxide or mixtures thereof.

11. Use according to claim 9, wherein pigment particles are introduced into the silica matrix to induce a specific colour or to cancel the perceived colour of the base material.

12. Use of flame-made doped silica (SiO₂) in the form of particles neither having antimicrobial nor antibacterial nor antifungal effect made in a flame spray pyrolysis method, wherein said flame-made doped silica comprises at least one functional dopant, said functional dopant consisting of at least one non-antimicrobial, non-antibacterial, non-antifungal acting metal and/or metal comprising compound, e.g. Zinc oxide, said method comprising
(i) preparing a precursor solution comprising at least one functional dopant precursor and at least one silica precursor in an organic solvent,
(ii) spraying said precursor solution into a flame fuelled by combustion of said precursor solution itself,
(iii) collecting the particulate doped silica,
as a generic scaffold for dispersing nanoparticles into polymers and/or liquids.

13. A doped silica in the form of particles obtainable by a method according to any of the preceding claims.

14. Particles according to claim 13, wherein the metal and/or metal oxide nanoparticles exhibit a characteristic size range between 30 and 100 nm.

15. Particles according to claim 13 or 14, wherein pigment particles are present in the silica matrix to induce a specific colour or to cancel the perceived colour of the base material.

16. Particles according to claim 13, comprising nanoparticles of silver and/or copper and/or oxides of silver and/or oxides of copper together with dopant metals possessing lower galvanic activity than silver.

17. Particles according to claim 16, wherein the dopant metals are in the form of discrete nanoparticles.

18. Particles according to any of claims the 16 or 17, wherein the dopant metals are alloyed with the nanoparticles of silver and/or copper and/or oxides of silver and/or oxides of copper.

19. Particles according to any of claims 16-18, wherein the additional dopant metal is platinum and/or palladium and/or gold.

20. Particles according to claim 13, wherein the particles exhibit a more rapid rate of metal ion release on contact with moisture than a metal-doped silica material in the absence of platinum or gold or palladium.
